Europäisches Patentamt

European Patent Office

Office européen des brevets

(11) Publication number: **0 201 156**
A2

# EUROPEAN PATENT APPLICATION

(21) Application number: **86301122.7**

(51) Int. Cl.⁴: **G 11 B 23/04**

(22) Date of filing: **18.02.86**

(30) Priority: **23.02.85 JP 35168/85**

(71) Applicant: **Kanchiku, Hikofumi, 9-2 Shirogane 4 chome, Minato-ku Tokyo (JP)**

(43) Date of publication of application: **12.11.86 Bulletin 86/46**

(72) Inventor: **Kanchiku, Hikofumi, 9-2 Shirogane 4 chome, Minato-ku Tokyo (JP)**

(84) Designated Contracting States: **AT BE CH DE FR GB LI LU NL SE**

(74) Representative: **Sommerville, John Henry et al, SOMMERVILLE & RUSHTON 11 Holywell Hill, St. Albans Hertfordshire, AL1 1EZ (GB)**

(54) **Tape cassette.**

(57) A tape cassette comprising a tape cartridge (10) rotatably containing a reel hub (15) on which a length of magnetic tape (8) is wound; and a cassette housing (1) composed of an accommodating space (9) adapted to detachably receive the tape cartridge, another reel hub (4) rotatably supported between the upper and lower cassette halves (2), and a tape passage extending from the accommodating space to the reel hub supported between the cassette halves for permitting the magnetic tape to pass therethrough, thereby enjoying easy exchange of different magnetic tapes for another one.

TAPE CASSETTE


This invention relates to a tape cassette for use in a cassette tape recorder or playback unit or the like, and more particularly to a tape cassette composed of a cassette housing and a tape cartridge which is provided with a roll of recording magnetic tape and can be detachably set inside the cassette housing.

The conventional tape cassette has a recording magnetic tape wound on rotatable reel hubs inseparatably disposed within a cassette housing. The tape cassette of this type has an advantage that it can easily be handled and applied to a cassette tape recorder or playback unit or the like.

However, if a lot of tape cassettes is in possession, a space for the tape cassettes to occupy cannot be disregarded. In recent years, cassette tape recorders or playback units of small size and light weight have widespread arrived on the market, and in many cases, such a portable cassette tape recorder or playback unit would be carried about with some tape cassettes. Under the circumstances, a need has been felt for a small, light and handy tape cassette. To meet the needs, the inventor of this invention has earlier proposed tape cassettes (Japanese Utility Model Application Disclosures Sho. 59-180286; Sho. 59-180283; and Sho. 60-127680). The proposed tape cassette of the typical type iscapable of detachably mounting a roll of recording magnetic tape into a cassette housing. With this tape cassette, only one cassette housing may be prepared for many magnetic tape rolls.

However, when the magnetic tape roll is taken out of the cassette housing, there would be a danger that the recording surface of the magnetic tape is soiled with the finger or injured. Also disadvantageously the magnetic tape roll must be carefully handled because it is liable to come loose, and the work of inserting the magnetic tape roll into the cassette housing is troublesome.

In view of the above, an object of this invention is to provide a tape cassette with which a recording magnetic tape can be detachably mounted in a cassette housing with a simple operation, so that the magnetic tape can freely be exchanged for different one without being soiled with the finger nor injured.

To attain the object described above according to this invention, there is provided a tape cassette comprising a tape cartridge containing a rotatable reel hub around which a length of recording magnetic tape is wound, and a cassette housing composed of a pair of upper and lower cassette halves each having an aperture with annular flange inwardly protruding to form a spindle hole, a reel hub rotatably supported by the annular flanges between the upper and lower cassette halves, an accommodating space defined between the cassette halves and adapted to detachably receive the tape cartridge, and a tape passage extending from the accommodating space to the spindle hole formed in the cassette housing through the front portion of the cassette housing.

The tape passage is open so as to permit the recording magnetic tape to removably pass therethrough, and the upper cassette half is provided with a passage slot communicated with the aperture formed in the upper cassette half so as to permit the magnetic tape to removably pass therethrough, whereby the magnetic tape is drawn out of the tape cartridge and detachably attached to the reel hub supported by the annular flanges of the cassette halves past the tape passage and the passage slot.

The other objects and characteristic features of this invention will become apparent to those skilled in the art as further disclosure is made in the following description of a preferred embodiment of the invention as illustrated in the accompanying drawings; in which:

Figure 1 is a plan view of one embodiment of a tape cassette according to this invention.

Figure 2 is a plan view of the same in use.

Figure 3 is a sectional plan view of the same.

Figure 4 is a sectional plan view of a tape cartridge.

Figure 5 is an explanatory view of another embodiment of this invention.

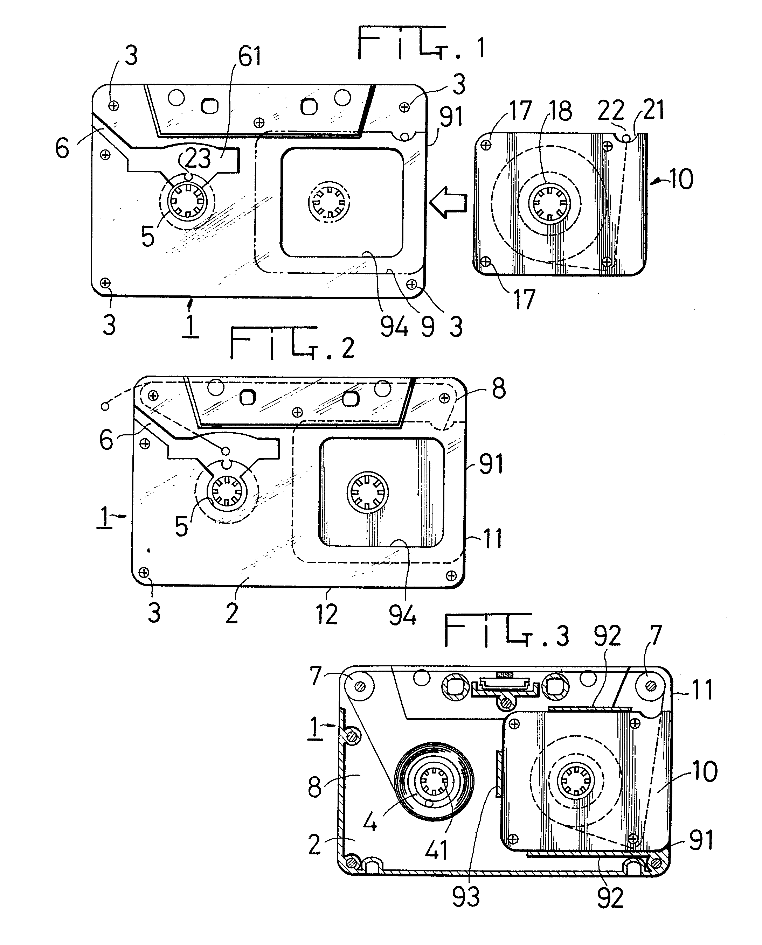

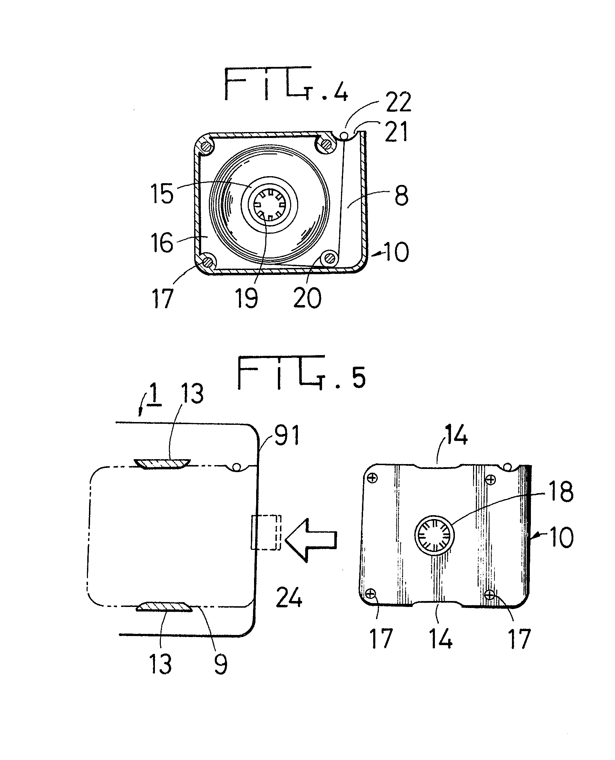

One embodiment of the tape cassette provided by the present invention will be described with reference to Figures 1 through 3. In the drawings, the reference numeral 1 denotes a cassette housing composed of upper and lower cassette halves or sections 2 which are united with each other and secured by means of mounting screws 3. The cassette halves 2 are respectively provided on one side portion of the cassette housing 1 with an aperture to form a spindle hole of the cassette housing 1. The reference numeral 4 denotes a reel hub having a central hole provided with a plurality of lugs 41 extending radially and rotatably supported by annular flanges 5 inwardly protruding from the periphery of the apertures bored in one side portion of the upper and lower cassette halves 2.
The reference numeral 6 denotes a passage slot formed in
one of the cassette halves (upper half) 2 and communicated
with the aperture defined by the annular flange 5 of the
cassette half 2 through a cutout portion 61. The cutout
portion 61 is adapted to expose the part of the reel hub
4. It is desirable to enlarge the portion 61 to
facilitate insertion of the finger thereinto. The
reference numeral 7 denotes a pair of guide rollers for a
magnetic tape 8. The guide rollers 7 are arranged
adjacent the corners of the cassette housing 1. The
reference numeral 9 denotes an accommodating space defined
inside the other side portion of the cassette housing 1 so
as to receive and hold in position a tape cartridge 10.
The accommodating space 9 has a side opening 91 formed in
a side wall 11 or a rear wall 12 of the cassette housing 1
and is defined among opposite guide walls 92 and a
stopping wall 93 which are disposed inside the cassette
housing 1. The stopping wall 93 is not indispensable to
this embodiment. The reference numeral 94 denotes a sight
window through which the existence of the tape cartridge
10 can readily be confirmed. The sight window 94 must be
made smaller than the tape cartridge 10 so as to prevent
the tape cartridge 10 from coming out and formed in either
of the cassette halves 2, whereas it is not necessarily
formed if the cassette halves 2 are made of a transparent
or semi-transparent material. In the place of the guide
walls 92, there may be formed protrusions or lugs 13 on
the inner surface of either cassette half 2 and
complementary recesses or notches 14 in the corresponding
portion of the tape cartridge 10 as shown Figure 5.
Conversely, the protrusions or lugs 13 may be formed on
the tape cartridge 10, and the recesses or notches 14 may
be formed in one of the cassette halves 2. Otherwise, a
resilient arm plate (not shown) may be provided in the sight window 94 of each of the cassette halves 2 so that the tape cartridge 10 can be held in position by the resilient arm plates.

The tape cartridge 10 is composed of upper and lower frame halves 16 which are fixedly attached to each other by use of mounting screws 17 and adapted to contain another reel hub 15. The reel hub 15 has a central hole and a plurality of lugs 19 extending from the inner surface of the central hole. The reel hub 15 is rotatably supported by annular flanges 18 protruding inwardly around the apertures in the upper and lower frame halves 16. On the real hub 15, there is wound a length of recording magnetic tape 8. The leading end of the magnetic tape 8 can be drawn out of the tape cartridge 10 from a mouth 21 formed in the tape cartridge 10 past a guide roller 20 which is provided as occasion arises. It may be advantageous to attach a stem 22 having an appropriate diameter to the leading end of the magnetic tape 8. In this case, the reel hub 4 may be provided in the peripheral portion thereof with an engaging hole 23 for permitting insertion of the stem 22 in the engaging hole 23 so as to detachably connect the magnetic tape 8 to the reel hub 4.

In order to reliably secure the tape cartridge 10 in the accommodating space 9, though the tape cartridge 10 may easily be supported as pinched between the guide walls 92 or held by means of the protrusions 13 which are disposed on the inner surface of one the cassette half 2 and engaged with the recesses 14 formed in the tape cartridge 10 as mentioned above, there may be provided a locking piece 24 which is pivotally supported on the side edge portion of the cassette half 2 so as to open or close the side opening 91 as shown in Figure 5, or otherwise, a lid member is mounted by detachably or openably constructing the part of one of the cassette halves. The the tape passage extending from the side opening 91 to the passage slot 6 past the front portion between the paired guide rollers 7 is open so that the magnetic tape 8 wound on the reel hub 15 can readily be inserted in or removed from the aforementioned tape passage.

In the illustrated embodiment of the invention, when the tape cartridge 10 is fitted in the accommodating space 9, while being guided by the opposite guide walls 92, it is secured in position in the accommodating space 9 by means of the protrusions 13 which is brought into engagement with the recesses 14 formed in the tape cartridge 10 or the locking piece 24 disposed at the side opening 91 of the housing 1. Thus, the tape cartridge 10 becomes set inside the cassette housing 1. Subsequently, the magnetic tape 8 contained within the tape cartridge 10 is drawn out from the tape cartridge 10 by taking out the leading end of the tape 8 and led to the reel hub 4 past the tape passage between the guide rollers 7 and the passage slot 6. Then, the magnetic tape 8 is brought in engagement with the reel hub 4 by fitting the stem 22 at the leading end of the magnetic tape 8 into the engaging hole 23. The tape cartridge 10 is easily removed from the cassette housing 1 by being pulled out after removing the leading end of the magnetic tape 8 from the reel hub 4.

As is clear from the description given above, the tape cassette of the present invention enjoys easy exchange of tape cartridge with a roll of magnetic tape for another tape cartridge without soiling nor injuring the magnetic tape. Besides, a plurality of recording magnetic tapes can be utilized by using only one cassette housing, whereby the area occupied by and weight of the cassette tapes are remarkably reduced and as a result, the storage and conveyance of the cassette tapes becomes easy.

Obviously, many modifications and variations of the present invention are possible in light of the above teachings. It is therefore to be understood that within the scope of the appended claims, the present invention may be practiced otherwise than as specifically described herein.

CLAIMS:

1.      A tape cassette comprising a tape cartridge (10)
rotatably containing a reel hub (15) on which a length of
magnetic tape (8) is wound; and a cassette housing (1)
composed of a pair of upper and lower cassette halves (2)
each having in one side portion thereof an aperture with
annular flange (5) inwardly protruding, a reel hub (4)
rotatably supported by said annular flanges between said
upper and lower cassette halves, an accommodating space
(9) defined inside the other side portion thereof between
said cassette halves and adapted to detachably receive
said tape cartridge, and a tape passage extending from
said accommodating space to said aperture formed in said
one side portion through the front portion of said
cassette housing, said tape passage being open so as to
permit the magnetic tape to removably pass therethrough,
and said upper cassette half being provided with a passage
slot (6) communicated with said aperture formed in said
one side portion so as to permit the magnetic tape to
removably pass therethrough, whereby said magnetic tape
(8) is drawn out of said tape cartridge (10) and
detachably attached to said reel hub (4) supported by said
annular flanges of said cassette halves past said tape
passage and said passage slot.

2.      A tape cassette according to claim 1, wherein said
accommodating space (9) is defined among opposite guide
walls disposed inside said cassette housing and a stopping
wall.

3.      A tape cassette according to claim 1, wherein one
of said upper and lower cassette halves (2) is provided on
its inner surface with protrusions or lugs (13) and said
tape cartridge is provided with complementary recesses
(14) or notches which come into engagement with said protrusions or lugs of said cassette half so as to hold in position said tape cartrige inside said accommodating space (9).

4.      A tape cassette according to claim 1, wherein at least said upper cassette half (2) is provided with a sight window (94) being smaller than said tape cartridge (10).

5.      A tape cassette according to claim 1, wherein said upper cassette half (2) is provided around the part of said aperture formed on said one side portion thereof so as to permit insertion of the finger.

6.      A tape cassette according to claim 1, wherein a stem (22) is attached to the leading end of said magnetic tape (8) wound on said reel hub (15) contained in said tape cartrige (10).

FIG. 1

FIG. 2

FIG. 3

0 201 156

FIG.4

FIG.5